# EUROPÄISCHE PATENTANMELDUNG

(11) **EP 2 149 764 A2**
(43) Veröffentlichungstag der Anmeldung: **03.02.2010**
(21) Anmeldenummer: 09161280.4
(22) Anmeldetag: 27.05.2009
(51) Int. Cl.: F24J 2/20

(54) **Sonnenkollektor**

(30) Priorität: 28.07.2008 DE 102008035199; 28.07.2008 DE 102008035201
(71) Anmelder: IP Bewertungs AG, 20354 Hamburg (DE)
(72) Erfinder: Bardia Rostami, D-22299 (DE)
(74) Vertreter: Zech, Stefan Markus

(57) **Zusammenfassung**

Sonnenkollektor zum Erwärmen eines Fluids, umfassend ein erstes Blech (10) mit einer Außenseite (29) und einer Innenseite (16), ein zweites Blech (20) mit einer Außenseite (27) und einer Innenseite (21), wobei das erste Blech (10) und/oder das zweite Blech (20) mit einem Absorptionsmittel, insbesondere einer Absorberschicht (28) zur Absorption von Sonnenstrahlung versehen ist, wobei die Innenseite (16,21) des ersten und/oder zweiten Blechs mit mindestens zwei rillenförmigen Vertiefungen (14) versehen ist und mindestens ein Steg (15) zwischen den mindestens zwei rillenförmigen Vertiefungen (14) angeordnet ist sowie die Innenseiten (16,21) der beiden Bleche (10,20) in Kontakt gebracht werden derart, dass die mindestens zwei rillenförmigen Vertiefungen (14) zumindest Teile eines Fluidkanals ausbilden und der mindestens eine Steg (15) zumindest bereichsweise von Fluid überströmbar ist.

## Beschreibung

Die Erfindung betrifft einen Sonnenkollektor nach Anspruch 1, eine Verwendung eines Wärmetauschers nach Anspruch 17 sowie ein Verfahren zur Herstellung eines Sonnenkollektors nach Anspruch 18.

Sonnenkollektoren zur Erwärmung eines Fluids, insbesondere zur Warmwassererzeugung sind im Stand der Technik bekannt.

Beispielsweise in der DE 10 2006 003 096 A1 wird ein Sonnenkollektor beschrieben, der ein Absorberblech zur Absorption des Sonnenlichtes und Kanäle für ein Wärmeleitmedium aufweist, wobei die Kanäle für das Wärmeleitmedium mit dem Absorberblech derart verbunden sind, dass Wärme von dem Absorberblech an das Wärmeleitmedium übertragen werden kann. Unterhalb des Absorberbleches ist ein unteres Blech angeordnet, welches mit dem Absorberblech verbunden ist. Das untere Blech weist eine durchgehende Prägung auf, wodurch ein Kanal für das Wärmeleitmedium gebildet wird.

In diesem Zusammenhang wird es als unbefriedigend empfunden, dass pro Wärmeeinheit, die von dem Absorberblech auf das Wärmeleitmedium übertragen wird, ein relativ großer Aufwand, insbesondere in herstellungstechnischer Hinsicht erforderlich ist.

Der Erfindung liegt die Aufgabe zugrunde, einen Sonnenkollektor der oben genannten Art dahingehend weiterzubilden, dass der Übertrag von Wärme auf ein Wärmeleitmedium, insbesondere Fluid mit geringerem Aufwand, insbesondere in herstellungstechnischer Hinsicht erfolgen kann. Diese Aufgabe wird durch einen Sonnenkollektor nach Patentanspruch 1, eine Verwendung eines Wärmetauschers nach Patentanspruch 16 sowie ein Verfahren zur Herstellung eines Sonnenkollektors nach Patentanspruch 17 gelöst.

Die Aufgabe wird insbesondere durch einen Sonnenkollektor zum Erwärmen eines Fluids gelöst, wobei der Sonnenkollektor ein erstes Blech mit einer Außenseite und einer Innenseite sowie ein zweites Blech mit einer Außenseite und einer Innenseite umfasst, wobei das erste Blech und/oder das zweite Blech mit einem Absorptionsmittel, insbesondere einer Absorberschicht zur Absorption von Sonnenstrahlung versehen ist, wobei die Innenseite des ersten und/oder zweiten Blechs mit mindestens zwei rillenförmigen Vertiefungen versehen ist und mindestens ein Steg zwischen den mindestens zwei rillenförmigen Vertiefungen angeordnet ist sowie die Innenseiten der beiden Bleche in Kontakt gebracht werden derart, dass die mindestens zwei rillenförmigen Vertiefungen zumindest Teile eines Fluidkanals ausbilden und der mindestens eine Steg zumindest bereichsweise von Fluid überströmbar ist.

Der wesentliche Punkt der Erfindung liegt darin, dass die Stege von Fluid überströmbar sind, so dass das Fluid durch die Stege abgelenkt wird. Dies fördert die Durchmischung des Fluids innerhalb des Sonnenkollektors, was mit konstruktiv einfachen Mitteln den Übertrag von Wärme auf das Fluid verbessert. Dadurch kann der Sonnenkollektor verhältnismäßig klein, insbesondere flach ausgebildet werden und es können Kosten bei der Herstellung gespart werden. Bereits nach einer relativ kurzen Verweildauer des Fluids innerhalb des Sonnenkollektors kann ein relativ großer Wärmebetrag auf das Fluid übertragen werden. Insgesamt ist der Sonnenkollektor gegenüber dem Stand der Technik wenig anfällig in Bezug auf Verstopfungen und relativ tolerant gegenüber Fertigungsfehlern bei der Herstellung.

Vorzugsweise bilden die Innenseite der mindestens zwei Bleche zumindest abschnittsweise einen Hauptströmungskanal aus, innerhalb dem mindestens eine rillenförmige Vertiefung, die in ihrer Längserstreckung zumindest bereichsweise einen Winkel von vorzugsweise > 1°, weiter vorzugsweise > 10°, insbesondere > 30°, beispielsweise > 60° und/oder < 90°, vorzugsweise < 80°, weiter vorzugsweise < 60° und insbesondere < 30° gegenüber einer Hauptströmungsrichtung aufweist, angeordnet ist. Zumindest eine rillenförmige Vertiefung und/oder mindestens ein Steg ist also gegenüber einer Hauptströmungsrichtung schräg angeordnet. Dies ist eine einfache Maßnahme, um die Durchmischung des Fluids zu verbessern und insbesondere, um Turbulenzen zu erzeugen.

In einer bevorzugten Ausführungsform ist zumindest eine Vertiefung durch Materialabtragung und/oder Materialverdrängung, insbesondere durch Prägung zumindest abschnittsweise hergestellt. Durch diese oder andere Herstellungsverfahren können Bleche hergestellt werden, die eine etwa konstante Dicke aufweisen oder die im Bereich der Vertiefungen eine geringere als die durchschnittliche Dicke aufweisen. Insgesamt handelt es sich um herstellungstechnisch einfache Maßnahmen.

Vorzugsweise sind das erste und das zweite Blech im Wesentlichen identisch oder spiegelsymmetrisch ausgebildet. Eine "identische oder spiegelsymmetrische" Ausbildung kann sich dabei auf beispielsweise die Position und/oder die Orientierung und/oder die Anzahl der Vertiefungen und/oder Stege beziehen, die "identische oder spiegelsymmetrische" Ausbildung kann sich aber auch auf die Bleche an sich beziehen. Alternativ können erstes und zweites Blech auch unterschiedlich ausgeformt sein, so ist es insbesondere denkbar, eines der beiden Bleche ohne Vertiefungen auszubilden oder mit einer geringeren Zahl von Vertiefungen. Werden die Bleche im obigen Sinne "identisch oder spiegelsymmetrisch" ausgebildet, so reduziert dies den Aufwand bei der Herstellung.

Vorzugsweise ist das erste Blech gegenüber dem zweiten Blech um eine Achse, die in einer Kontaktebene liegt, rotiert. Dies ist insbesondere dann von Vorteil, wenn erstes und zweites Blech im Wesentlichen identisch sind. Insgesamt wird mit einfachen Mitteln erreicht, relativ komplizierte Fluidströmungswege herzustellen.

In einer bevorzugten Weiterbildung sind mindestens zwei Vertiefungen und/oder mindestens zwei Stege des ersten Blechs und des zweiten Blechs einander überkreuzend ausgebildet, wobei ein Kreuzungswinkel vorzugsweise mindestens 1°, weiter vorzugsweise mindestens 10°, insbesondere mindestens 45°, beispielsweise etwa 90° und/oder höchstens 90°, vorzugsweise höchstens 70°, weiter vorzugsweise höchstens 60°, insbesondere höchstens 45°, beispielsweise höchstens 30° beträgt. Durch die sich überkreuzenden Vertiefungen und/oder Stege wird Fluidteilchen eine Richtungsänderung aufgezwungen derart, dass diese beispielsweise in einem ersten Abschnitt innerhalb des ersten Blechs strömen und in einem weiteren Abschnitt in einer Vertiefung des zweiten Blechs strömen.

Vorzugsweise weist der durch die Vertiefungen gebildete Fluidkanal bzw. Strömungskanal einen kurvigen, insbesondere mäandrierenden und/oder in sich geschlossenen Verlauf auf. Bei derartigen Ausführungsformen, kann die Verweildauer des Fluids innerhalb des Sonnenkollektors erhöht werden.

In einer konkreten Ausführungsform umfasst die Absorberschicht Titandioxid (TiO₂), welches vorzugsweise mit Silber dotiert ist. Mit einer derartigen Beschichtung kann besonders effektiv Sonnenstrahlung aufgefangen und in Wärme umgewandelt werden.

Vorzugsweise ist die Absorberschicht mittels eines Sol-Gel-Verfahrens hergestellt. Dies reduziert die Herstellungskosten. Alternativ kann auch ein Cermet als Absorberschicht vorgesehen sein bzw. aufgebracht werden.

Vorzugsweise sind das erste und zweite Blech zumindest punktuell auch in einem inneren Bereich miteinander verbunden, insbesondere verklebt, verschweißt und/oder verlötet. Dadurch wird die Stabilität des Sonnenkollektors verbessert.

In einer bevorzugten Weiterbildung sind das erste und das zweite Blech zumindest abschittsweise an mindestens einem Kreuzungsbereich von mindestens zwei Stegen miteinander verbunden, insbesondere verklebt, verschweißt und/oder verlötet. Alternativ können erstes und zweites Blech auch mit Befestigungsmitteln, wie Schrauben, Nieten oder dergleichen miteinander fest verbunden werden oder auch lösbar miteinander verbunden sein.

Vorzugsweise ist das mindestens eine erste und/oder zweite Blech zumindest teilweise aus Aluminium und/oder Kupfer und/oder rostfreiem Stahl, insbesondere Edelstahl ausgebildet. Im Allgemeinen kann auch ein anderes, insbesondere antikorrosives und/oder fluidabweisendes Material zur Anwendung kommen.

In einer bevorzugten Ausführungsform verlaufen die Vertiefungen des mindestens einen ersten und/oder zweiten Blechs zumindest abschnittsweise, insbesondere über ihre gesamte Längserstreckung zueinander parallel. Dadurch können in einfacher Weise die Vertiefungen aneinander geordnet werden.

Vorzugsweise verlaufen die Vertiefungen des mindestens einen ersten und/oder zweiten Blechs im Wesentlichen gerade. Die Vertiefungen können rippenartig strukturiert sein.

Vorzugsweise überschneidet sich mindestens eine Vertiefung des ersten und/oder zweiten Blechs mit mindestens zwei, vorzugsweise vier, weiter vorzugsweise sieben, insbesondere zehn Vertiefungen des jeweils gegenüberliegenden Blechs mindestens einmal. Beispielsweise kann sich eine Vertiefung des ersten Blechs mehrmals mit derselben gegenüberliegenden Vertiefung des zweiten Blechs beispielsweise mehr als zweimal oder mehr als viermal überschneiden.

In einer weiter bevorzugten Ausgestaltung sind das erste Blech und/oder das zweite Blech jeweils aus zwei oder mehr aufeinandergelegten flächigen Einzelelementen gebildet. Insbesondere kann es sich bei den Einzelelementen pro erstem oder zweitem Blech um ein Außenblech sowie ein Innenblech handeln. Das Innenblech kann mit Ausstanzungen versehen sein, die gleichzeitig die Vertiefungen ausbilden. Dieses Innenblech kann auf das Außenblech flächig anliegend oder unter Beibehaltung eines Abstandes aufgelegt sein, so dass das Außenblech dazu dient mit dem gegenüberliegenden Blech bzw. Außenblech insbesondere fluiddicht verbunden zu werden und das bzw. die Innenbleche eine besonders einfache Variante zur Herstellung der Vertiefungen darstellen. Es können insbesondere zur Ausbildung des ersten sowie zweiten Bleches einander entsprechende Innenbleche Verwendung finden, so dass nur ein Blech mit einem bestimmten Muster an Vertiefungen hergestellt, insbesondere gestanzt werden muss und dieses Blech um 180° gewendet dann auch für die gegenüberliegende Seite, also zur Ausbildung des zweiten Blechs Verwendung finden kann. Die Außenbleche bilden insofern die Deckelplatten für den Sonnenkollektor. Die Innenplatten können auf einfache Weise mit Vertiefungen oder Ausstanzungen versehen werden.

Es versteht sich von selbst, dass für die Außenbleche (Deckelplatten) sowie für die Innenbleche nicht zwangsläufig metallische Materialien Verwendung finden müssen, sondern auch andere Materialien in Betracht gezogen werden könnten.

Die oben genannte Aufgabe wird auch gelöst durch die Verwendung eines Wärmetauschers, umfassend ein erstes Blech mit einer Außenseite und einer Innenseite sowie ein zweites Blech mit einer Außenseite und einer Innenseite, wobei das erste Blech und/oder das zweite Blech vorzugsweise mit einem Absorptionsmittel, insbesondere einer Absorberschicht zu Absorption von Sonnenstrahlung versehen ist, wobei die Innenseite des ersten und/oder zweiten Blechs mit mindestens zwei rillenförmigen Vertiefungen versehen ist und mindestens ein Steg zwischen den mindestens zwei rillenförmigen Vertiefungen angeordnet ist sowie die Innenseiten der beiden Bleche in Kontakt gebracht werden derart, dass die mindestens zwei rillenförmigen Vertiefungen zumindest Teile eines Fluidkanals ausbilden und der mindestens eine Steg zumindest bereichsweise von Fluid überströmbar ist, wobei der Wärmetauscher als Sonnenkollektor verwendet wird. Die Verwendung eines derartigen Wärmetauschers als Sonnenkollektor hat den Vorteil, dass die Sonnenenergie mit einfachen Mitteln und effektiv auf das Fluid zur Erwärmung desselben übertragen werden kann.

Obige Aufgabe wird auch gelöst durch ein Verfahren zur Herstellung eines Sonnenkollektors, insbesondere der vorbeschriebenen Art, wobei das Verfahren die Folgenden Schritte umfasst:
a) Bereitstellen eines ersten Blechs mit einer Außenseite und einer Innenseite sowie eines zweiten Blechs mit einer Außenseite und einer Innenseite,
b) Ausstatten zumindest des ersten Blechs und/oder des zweiten Blechs mit einem Absorptionsmittel, insbesondere einer Absorberschicht zur Absorption von Sonnenstrahlung,
c) Ausstatten der Innenseite des ersten und/oder zweiten Blechs mit mindestens zwei rillenförmigen Vertiefungen, wobei mindestens ein Steg zwischen den mindestens zwei rillenförmigen Vertiefungen ausgebildet wird, sowie Kontaktieren der Innenseiten der beiden Bleche derart, dass die mindestens zwei rillenförmigen Vertiefungen zumindest Teile eines Fluidkanals ausbilden und der mindestens eine Steg zumindest bereichsweise von Fluid überströmbar ist.

Das Verfahren weist im Wesentlichen dieselben Vorteile wie der vorgenannte Sonnenkollektor auf. Es kann also insbesondere mit einfachen Mitteln ein derartiger Sonnenkollektor hergestellt werden.

Bei dem Verfahren kann zumindest eine Vertiefung durch Materialabtragung und/oder Materialverdrängung, insbesondere durch Verdrängung hergestellt werden.

Im Schritt a) können im Wesentlichen, insbesondere bezüglich Geometrie und/oder Orientierung der Vertiefungen, identische Bleche bereitgestellt werden.

Die Bleche können vor ihrem Kontaktieren zunächst von einer Parallelposition ausgehend um 180° gegeneinander rotiert positioniert werden.

In einer besonderen Ausgestaltung kann bei der Herstellung des ersten und/oder zweiten Blechs auch daran gedacht werden, dieses zwei- oder mehrteilig, also in zwei oder mehr Lagen aufzubauen, wobei beispielsweise ein Innenblech mit Vertiefungen, insbesondere Aussparungen, bevorzugt in Gestalt von Ausstanzungen versehen werden kann und dieses Innenblech dann auf ein Außenblech zur Herstellung des ersten oder zweiten Blechs aufgelegt wird.

Die Absorberschicht kann insbesondere Titandioxid (TiO₂) welches vorzugsweise mit Silber dotiert ist, umfassen und mittels Sol-Gel-Verfahren hergestellt werden.

Weitere Ausführungsformen ergeben sich aus den Unteransprüchen.

Ein unabhängiger Gegenstand der Erfindung ist weiterhin ein Solarthermie-Fassadenelement unter Verwendung von mindestens einem äußeren nicht selbsttragenden Glaselement und einem Solarthermieelement, insbesondere nach einem der Ansprüche 1 bis 16 bzw. hergestellt nach einem der Ansprüche 18 bis 22, mit Zu- und Ableitungen sowie weiter ein Verfahren zur Herstellung und die Anwendung.

Das Solarthermieelement kann dabei konventionell nach dem Stand der Flachkollektortechnik aus einem Absorberblech mit thermisch kontaktierten Absorberrohren, die üblicherweise mäanderförmig verlegt sind, bestehen oder bevorzugt aus einem plattenförmigen Solarthermie-Kollektor unter Verwendung von mindestens zwei thermisch leitfähigen Blechen, wobei mindestens ein Blech mit einer Absorberschicht versehen ist und die Bleche mindestens mit einer einseitigen Rillung geprägt sind und die Rillungen 100 bis 90° zueinander versetzt sind und über einen Zu- und Abfuhrkanal für ein Wärmetauschermedium verfügen bzw. unter Verwendung von Blechen bzw. einem Sonnenkollektor nach der vorliegenden Erfindung.

Das Solarthermieelement inklusive der Zu- und Ableitungen wird dabei als tragendes Fassadenelement verwendet, wobei zumindest ein äußeres Glaselement zumindest stückweise beabstandet an diesem Solarthermieelement befestigt wird.

Zwischen Solarthermieelement und Gebäudefassade wird weitgehend nach dem Stand der Technik eine Isolationsschicht angeordnet. Diese Isolationsschicht kann wahlweise direkt mit dem Solarthermieelement verbunden sein oder aber mit der Fassadenwand oder als eigenständiges Element angeordnet sein.

In einer erfinderischen Weiterbildung wird zumindest die Oberfläche des Absorberblechs beziehungsweise des plattenförmigen Solarthermie-Kollektors mit einer Absorberschicht mittels Sol-Gel Verfahren auf Basis von Titandioxid mit Silberdotierung hergestellt (unter Verwendung des Verfahrens gemäß: FH-Kiel Es-Souni DE 10 2006 028 429 B3 Verfahren zur Herstellung einer Absorberbeschichtung auf Sol-Gel-Basis für Solarthermie). Alternativ kann auch ein Cermet als Absorberschicht vorgesehen sein.

Die Kollektorbleche können dabei aus Aluminium oder Kupfer oder rostfreiem Stahl gebildet werden. In allen Fällen muss aufgrund der Lebensdaueranforderung von zumindest 20 Jahren jegliche Korrosionsbildung vermieden werden. Dies ist speziell bei Aluminium und Edelstahl ein kritischer Punkt und muss speziell bezüglich der Verbindungsmethode berücksichtigt werden, da hierbei üblicherweise entsprechende Temperaturen auftreten.

Bei Edelstahlblechen kann auf die lange Erfahrung bei INOX-Edelstahldacheindeckungen (vgl. http://www.euro-inox.org/htm/p 5 DE.html) mit Stahlblechqualitäten gemäß W.No. 1.4310, 1.4301 bis 1.4404 bzw. 1.4436 beziehungsweise den AISI-ASTM Typen 301, 304 bis 316L beziehungsweise den DIN Bezeichnungen X 12 CrNi 17 7, X 5 CrNi 18 9 bis X 2 CrNiMo 18 10 und dergleichen rostfreie Stahlqualitäten beziehungsweise auf die Europäischen Normen EN 502, EN 508-3, EN 10088 und EN 10088-2 zurückgegriffen werden (vgl.: http//www.euro-inox.org/pdf/build/roofing/RoofinqTech _DE.pdf) bzw. http://www.qualitygroup.in/img/catalogue.pdf bzw. http://www.qualityfoils.com/Faq.htm bzw. http://www.qualityfoils.com/App.htm bzw. http://www.qualityfoils.com/Grade.htm (Grade Equivalent Table).
Pfosten-Riegelkonstruktion
http://de.wikipedia.org/wiki/Pfosten-Riegelkonstruktion

Folgende Aspekte zeichnen das erfindungsgemäße Solarthermie-Fassadenelement aus:
1. Solarthermie-Fassadenelement (41) unter Verwendung von mindestens einem äußeren Glaselement (43) und einem Solarthermieelement (44) mit Zu- und Ableitungen (52, 53), **dadurch gekennzeichnet, dass** das Solarthermieelement (44) als tragendes Fassadenelement mit geeigneter Festigkeit ausgebildet ist und das zumindest eine äußere Glaselement (43) zumindest stückweise beabstandet am Solarthermieelement (44) zur Ausbildung eines Fassadenelementes befestigt ist und zwischen Solarthermielement (44) und Gebäudewand (46) eine Isolation (45) angeordnet ist.
2. Solarthermie-Fassadenelement (41) nach Aspekt 1, **dadurch gekennzeichnet, dass** das Solarthermieelement (44) aus einem konventionellen Flachkollektor (44, 58) mit einem Absorberblech (55) und darauf thermisch leitfähig befestigten Absorberroheren (51) besteht.
3. Solarthermie-Fassadenelement (41) nach Aspekt 1, **dadurch gekennzeichnet, dass** das Solarthermieelement (44) aus einem plattenförmigen Flachkollektor (44, 59) mit einem Absorberblech (56) und einem Rückseitenblech (57) besteht.
4. Solarthermie-Fassadenelement (41) nach Aspekt 1 bis 3, **dadurch gekennzeichnet, dass** das Glaselement (43) aus einem Floatglas beziehungsweise allgemein einem Flachglas oder einem eisenoxidarmen Weißglas (Solarglas) besteht und diverse Beschichtungen bezüglich Reduktion der Reflektion als auch der ästhetischen Anmutung aufweisen kann.
5. Solarthermie-Fassadenelement (41) nach Aspekt 1 bis 4, **dadurch gekennzeichnet, dass** das Glaselement (43) aus einem ESG (Einscheibensicherheitsglas) oder aus einem VSG (Verbundsicherheitsglas) gebildet wird, beziehungsweise aus zwei oder mehr gleich- oder ungleichartig beabstandeten Scheiben im Sinne eines Isolierglasverbundes gebildet wird.
6. Solarthermie-Fassadenelement (41) nach Aspekt 1 bis 5, **dadurch gekennzeichnet, dass** das Befestigungselement (47) auf dem Glaselement (43) mittels Klebeelement(48) befestigt wird.
7. Solarthermie-Fassadenelement (41) nach Aspekt 1 bis 6, **dadurch gekennzeichnet, dass** das Absorberblech (55, 56) derart beschichtet ist, dass eine Sonnenlicht-Absorption (a) von größer 92% und insbesondere größer 95% und eine Emission (E) kleiner 5% und insbesondere kleiner 4% aufweist.
8. Solarthermie-Fassadenelement (41) nach Aspekt 1 bis 7, **dadurch gekennzeichnet, dass** das Absorberblech (55, 56) mit einer Absorberbeschichtung für Sonnenlicht mittels Sol-Gel Verfahren auf Basis von Titandioxid mit Silberdotierung versehen ist.
9. Verfahren zur Herstellung von einem Solarthermie-Fassadenelement (41) nach Aspekt 1 bis 8, wobei der Solarthermie-Kollektor (44) derart ausgeführt wird, dass er eine derartige Eigensteifigkeit und Festigkeit aufweist, dass daran ein Fassadenglaselement (43) befestigt werden kann.
10. Anwendung von einem Solarthermie-Fassadenelement (41), hergestellt nach Aspekt 9 zur Verkleidung von Gebäudefassaden und zur Integration in Schrägdächern.

Nachfolgend wird die Erfindung auch hinsichtlich weiterer Merkmale und Vorteile anhand von Ausbildungsbeispielen beschrieben, die anhand der Abbildungen näher erläutert werden.

Hierbei zeigen:
- Fig. 1: ein erstes Blech des Sonnenkollektors in einer schematischen Ansicht von oben;
- Fig. 2: einen Schnitt entlang der Linie II-II in Fig. 1;
- Fig. 3: eine Ausführungsform eines erfindungsgemäßen Sonnenkollektors in einer schematischen Ansicht von oben; und
- Fig. 4: einen Schnitt entlang der Linie IV-IV in Fig. 3.
- Fig. 5: eine weitere Ausführungsform zur Realisierung eines erfindungsgemäßen Sonnenkollektors in schematischer Darstellung.
- Figur 6:: einen schematischen Schnitt durch eine beispielhafte Ausführungsform eines Solarthermie-Fassadenelementes (41),
- Figur 7a:: eine schematische Darstellung eines beispielhaften Solar-Kollektors (44, 58) nach konventioneller Bauart mit einem Absorberblech (55) und Absorber- rohren (51),
- Figur 7b:: einen schematischen Schnitt A-B durch einen konventionellen Solarthermie- Kollektor (44, 58),
- Figur 8a:: eine schematische Darstellung eines plattenförmigen Solarthermie- Kollektors (44, 59) bestehend aus zwei Blechen (56, 57),
- Figur 8b:: einen schematischen Schnitt C-D durch den plattenförmigen Solarthermie- Kollektor (44, 59),
- Figur 9:: eine schematische Darstellung der Befestigungsmöglichkeit des Glases (43) und des Kollektors (44) mit der Isolation (45) bei Verwendung einer sogenannten Pfosten-Riegelkonstruktion auf Basis von U-Profilen (50),
- Figur 10:: eine schematische Darstellung der Befestigungsmöglichkeit des Glases (43) und des Kollektors (44) mit der Isolation (45) bei Verwendung einer sogenannten Pfosten-Riegelkonstruktion auf Basis von L-Profilen (50),
- Figur 11a:: das Absorberblech (56) des plattenförmigen Solarthermie-Flachkollektors (59) mit der Rillung (66) und der druckfesten Berandung (60) und den flächigen druckfesten Verbindungselementen (61).
- Figur 11b:: das Rückseitenblech (57) des plattenförmigen Solarthermie-Flachkollektors (59) mit der Rillung (66) und der druckfesten Brandung (60) und den flächigen druckfesten Verbindungselementen (61).
- Figur 12:: eine "Röntgenansicht" durch den zusammengesetzten Solarthermie- Flachkollektor (59), gebildet aus dem Absorberblech (56) nach Figur 11a sowie dem Rückseitenblech (57) nach Figur 11b.

In der nachfolgenden Beschreibung werden für gleiche und gleichwirkende Teile dieselben Bezugsziffern verwendet.

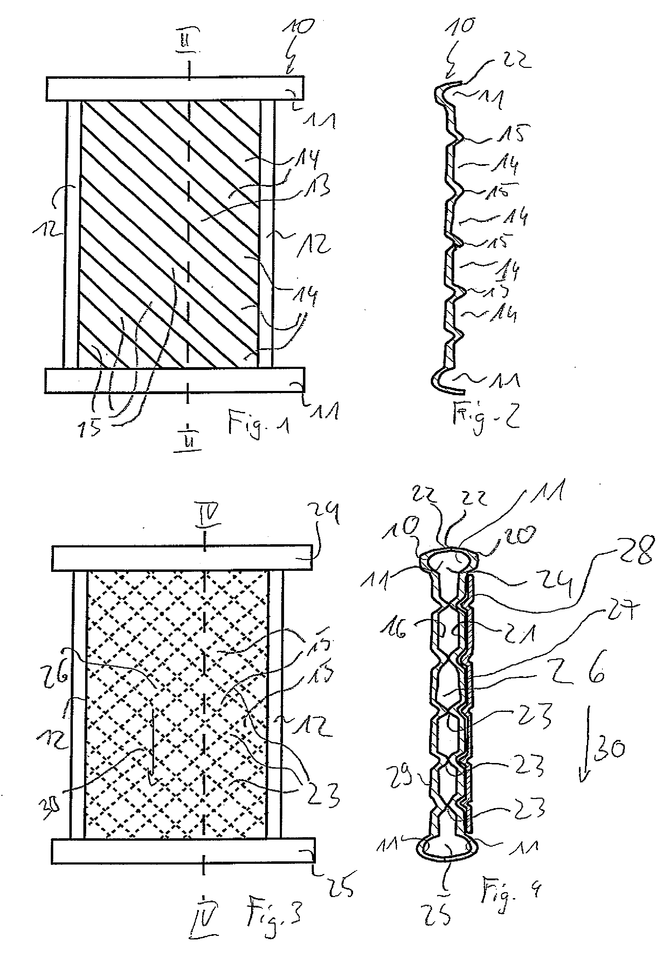

Fig. 1 zeigt ein erstes Blech 10 des Sonnenkollektors in einer schematischen Ansicht von oben. Fig. 2 zeigt einen Schnitt entlang der Linie II-II in Fig. 1. Das erste Blech weist eine etwa rechteckförmige Grundform auf. An zwei gegenüberliegenden Rändern (in der Ausführung gemäß Fig. 1 am oberen und unteren Rand) ist je eine parallel zum Rand verlaufende im Querschnitt (siehe Fig. 2) etwa halbkreisförmige Randvertiefung 11 in das Blech eingeformt. Weitere, sich je gegenüberliegende Seiten der rechteckförmigen Grundform werden durch im Wesentlichen plane Seitenränder 12 (in Fig. 1 am linken und rechten Rand) gebildet. In einem Innenbereich 13 verlaufen rillenförmige Vertiefungen 14. Die rillenförmigen Vertiefungen 14 sind im Wesentlichen gerade verlaufend ausgebildet und im Wesentlichen zueinander parallel angeordnet. Zwischen den einzelnen rillenförmigen Vertiefungen 14 sind Stege 15, diese trennend, angeordnet. Die Vertiefungen 14 und die Stege 15 weisen einen Winkel von ca. 40° bis 60° bezüglich ihrer Längserstreckung gegenüber den Randvertiefungen 11 auf. Weiterhin verlaufen die Vertiefungen 14 entweder von einem Seitenrand 12 zu dem anderen Seitenrand 12 oder von einer Randvertiefung 11 zu einem Seitenrand 12 (oder umgekehrt). Alternativ (abweichend von den Figuren) können die Vertiefungen 14 oder einige der Vertiefungen 14 auch von der einen Randvertiefung 11 bis zur anderen Randvertiefung 11 verlaufen.

Fig. 3 zeigt eine Ausführungsform eines erfindungsgemäßen Sonnenkollektors in einer schematischen Ansicht. Fig. 4 zeigt einen Schnitt entlang der Linie IV-IV in Fig. 3. Wie den Fig. 3 und 4 entnommen werden kann, ist über dem ersten Blech 10 ein zweites Blech 20 (siehe Fig. 4) angeordnet. Dabei steht eine Innenseite 16 des ersten Blechs 10 mit einer Innenseite 21 des zweiten Blechs 20 in Kontakt. Konkret sind die beiden Bleche 10, 20 an den Seitenrändern 12, an den Rändern 22 der Randvertiefungen 11 und an den Kreuzungsbereichen 23 der Stege 15 (in Fig. 3 gestrichelt gezeichnet) in Kontakt. Das erste Blech kann mit dem zweiten Blech an den Rändern 22 und/oder den Seitenrändern 12 und/oder den Kreuzungsbereichen 23 fest verbunden sein. Die Verbindung kann über lösbare oder unlösbare Verbindungselemente, wie Nieten, Schrauben oder dergleichen erfolgen. Alternativ kann die Verbindung auch durch Löten, Schweißen oder Verkleben erfolgen.

Im Allgemeinen können erstes und zweites Blech (10, 20) über entsprechende Befestigungsmittel in einem Innenbereich, beispielsweise an den Kreuzungsbereichen der Stege miteinander verbunden sein. Der Innenbereich kann sich beispielsweise von einem Zentrum der Bleche (10, 20) bis mindestens 10 % oder mindestens 30 % oder mindestens 80% einer Distanz vom Zentrum zu den Rändern der Bleche erstrecken.

Die Randvertiefungen 11 bilden im zusammengesetzten Zustand (siehe Fig. 4) einen Zufuhrkanal 24 und einen Ableitungskanal 25 aus. Vom Zufuhrkanal 24 kann über einen Hauptströmungskanal 26, innerhalb dem die Vertiefungen 14 und Stege 15 ausgebildet sind, Fluid zu dem Ableitungskanal 25 strömen. Durch die sich überkreuzenden Stege 15 werden insbesondere in den Kreuzungsbereichen 23 Hindernisse gebildet, die eine Richtungsänderung von Fluidteilchen ermöglichen und somit die Durchmischung des Fluids fördern.

An einer Außenseite 27 (siehe Fig. 4) des zweiten Blechs 20 ist eine Absorberschicht 28 zur Absorption von Sonnenstrahlung angeordnet. Eine Absorberschicht (nicht in den Figuren gezeigt) kann auch auf einer Außenseite 29 des ersten Blechs 10 angeordnet sein.

Die jeweiligen Vertiefungen, wie die Randvertiefungen 11 und die rillenförmigen Vertiefungen 14, können spanabhebend, durch Ätz-, Senkerodier- oder Prägeverfahren eingebracht werden. Die rillenförmigen Vertiefungen 14 können derart ausgebildet sein, dass sie keine Verbindung zueinander aufweisen (analog dem in den Figuren dargestellten Ausführungsbeispiel). Alternativ können die einzelnen rillenförmigen Vertiefungen 14 jedoch auch zumindest abschnittsweise eine Verbindung zueinander aufweisen. Im Schnitt entsprechend Fig. 4 bilden mehrere nebeneinander liegende Vertiefungen 14 eine Vertiefungskette oder Vertiefungsreihe, die in einer Hauptströmungsrichtung 30 liegt.

Die rillenförmigen Vertiefungen können einen trapezförmigen und/oder halbkreisförmigen und/oder dreieckförmigen Querschnitt aufweisen.

Der Sonnenkollektor kann zumindest halbseitig von einem Temperierraum (nicht in Figuren gezeigt) umschlossen sein.

Die Bleche 10, 20 sind isoliert betrachtet insofern identisch aufgebaut, dass sie einseitig eine Prägung aufweisen, die im zusammengesetzten Zustand (siehe Fig. 3 und 4) vorzugsweise zueinander um 180° rotiert einander entsprechen.

Das zweite Blech 20 kann optisch teilweise durchlässig sein, so dass durch das erste Blech 10 noch Sonnenstrahlung aufgefangen werden kann.

Je zwei rillenförmige Vertiefungen können an ihren Enden mit einer halbkreisförmigen Verbindung (nicht in den Figuren gezeigt) verbunden sein. Zwischen den Blechen 10, 20 kann noch ein Lochblech (nicht in Figuren gezeigt) angeordnet sein.

Die Absorberschicht 28 besteht im Wesentlichen aus TiO₂, welches mit Silber dotiert ist.

Die Absorberschicht 28 kann mittels Sol-Gel-Verfahren auf die Außenseite 27 des zweiten Blechs 20 aufgebracht werden.

Beispielsweise kann ein derartiges Herstellungsverfahren der DE 10 2006 028 429 B3 entnommen werden. In diesem Verfahren wird zur Herstellung einer Absorberbeschichtung in einem ersten Schritt ein Substrat mit einer Titan-Precursor-Lösung zur Erzeugung einer Titandioxid-Schicht beschichtet. Der Beschichtung folgt eine Wärmebehandlung des beschichteten Substrats bis zur Pyrolyse und Kristallisation der Schicht, wobei der Titan-Precursor-Lösung vor dem Beschichten Silber-Ionen in einer bestimmten Menge beigemischt werden, so dass die wärmebehandelte Schicht beispielsweise einen Silber-Massenanteil zwischen 10% und 80% aufweist. Pyrolyse und Kristallisation der Schicht erfolgt unter Beleuchtung. Es können einzelne Schichten von etwa 100 nm Dicke erzeugt werden, wobei der Silber-Massenanteil der wärmebehandelten Schicht zwischen 50% und 70% betragen kann und die Wärmebehandlung bei Temperaturen bis etwa 500°C erfolgen kann.

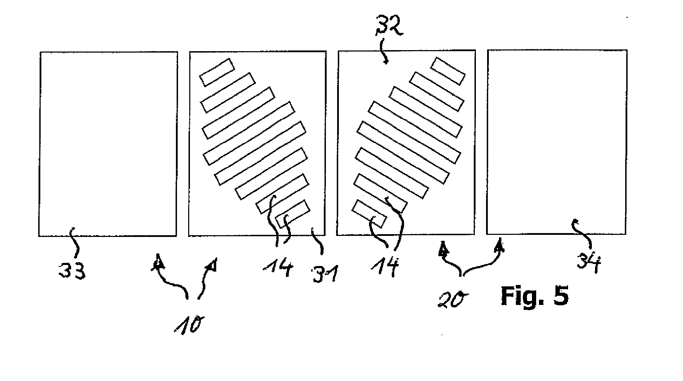

In Fig. 5 ist eine weitere Ausführungsform zur Herstellung eines ersten Bleches 10 sowie eines zweiten Bleches 20 eines erfindungsgemäßen Sonnenkollektors in schematischer Darstellung veranschaulicht. Erstes Blech 10 und zweites Blech 20 sind bei dieser Ausführungsform jeweils aus zwei aufeinandergesetzten flächigen Einzelblechen bzw. Einzelelementen 31 bis 34 gebildet, wobei das erste Blech 10 dementsprechend ein Außenblech 33 sowie ein Innenblech 31 und das zweite Blech 20 ein Außenblech 34 sowie ein Innenblech 32 aufweist. Die Innenbleche 31, 32 sind mit Ausnehmungen, insbesondere in Form von Ausstanzungen versehen, die nach Zusammenfügung mit dem Außenblech 33 bzw. 34 die Vertiefungen 14 ausbilden. Die vorliegende Ausführungsform zeichnet sich dadurch aus, dass die Vertiefungen einfach herzustellen sind, da die Innenbleche 31, 32 lediglich mit Ausnehmungen zu versehen, insbesondere auszustanzen sind. Darüber hinaus kann in einer nochmals bevorzugten Ausgestaltung das gleiche Werkzeug, insbesondere das gleiche Stanzwerkzeug, zur Herstellung beider Innenbleche 31, 32 Verwendung finden, da die Innenbleche einander entsprechen und lediglich um 180° rotiert entsprechend auch beim gegenüberliegenden Außenblech 33, 34 bzw. 34, 33 angefügt werden können.

In einer besonders bevorzugten Ausgestaltung sind die Innenbleche 31, 32 flächig auf den Außenblechen 33, 34 angeordnet derart, dass kein Zwischenraum zwischen Innenblech 31 und Außenblech 33 bzw. Innenblech 32 und Außenblech 34 verbleibt. Es sind aber auch Varianten denkbar, bei denen ein Zwischenraum vorgesehen ist.

Die Innenbleche 31, 32 können weiterhin mit ergänzenden Aussparungen oder Vertiefungen versehen werden, um Einströmöffnungen bzw. Ausströmöffnungen (nicht gezeigt), die mit einem Zufuhrkanal 24 bzw. Ableitungskanal 25 in Fluidverbindung stehen, zu definieren.

In einer besonders bevorzugten Ausgestaltung bilden die Außenbleche 33, 34 Deckelplatten, die fluiddicht miteinander verbunden sind, wobei weiter vorzugsweise mit der Verbindung der Außenbleche 33, 34 gleichzeitig eine Fixierung der Innenbleche 31, 32 bewirkt wird, so dass eine separate Fixierung der Innenbleche 31, 32 an den Außenblechen 33, 34 in einem separaten Arbeitsschritt unter Umständen entfallen kann.

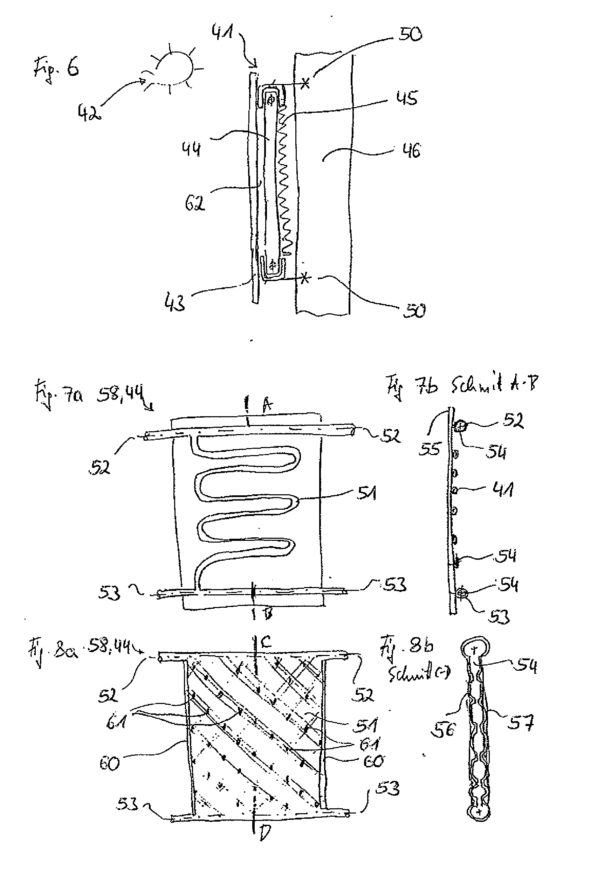

In Fig. 6 ist ein schematischer Schnitt durch eine beispielhafte Ausführungsform eines Solarthermie-Fassadenelements dargestellt. Das Solarthermie-Fassadenelement 41 weist zunächst einen Solarthermie-Kollektor 44 auf, der über ein entsprechendes Befestigungselement 50 an einem Wandelement bzw. einer Gebäudewand befestigt ist. Gleichzeitig ist am Befestigungselement 50 auch ein Glaselement bzw. Fassadenelement derart befestigt, dass ein Zwischenraum zwischen Glaselement bzw. Fassadenelement 43 und Solarthermie-Kollektor 44 verbleibt, wobei dieser Zwischenraum auch abgeschlossen und mit Luft bzw. Edelgas (Xenon, Argon, etc.) gefüllt sein kann.

In den Fig. 7a sowie 7b ist ein beispielhafter Solarkollektor nach konventioneller Bauart mit einem Absorberblech 55 und Absorberrohren 51 schematisch veranschaulicht. Das Absorberrohr 51 verläuft mäanderförmig zwischen einem oberseitigen Zu-/Abfluss 52 und einem unterseitigen Zu-/Abfluss 53.

In den Fig. 8a sowie 8b ist ein plattenförmiger Solarthermie-Kollektor nach der Erfindung veranschaulicht, wobei hier schräg zueinander verlaufende Temperierkanäle 66, 67 vorgesehen sind, wie bereits anhand der Ausführungsformen nach den Fig. 1 bis 5 ausführlich beschrieben. Die Temperierkanäle 66, 67 münden in entsprechende Zu-/Abflüsse.

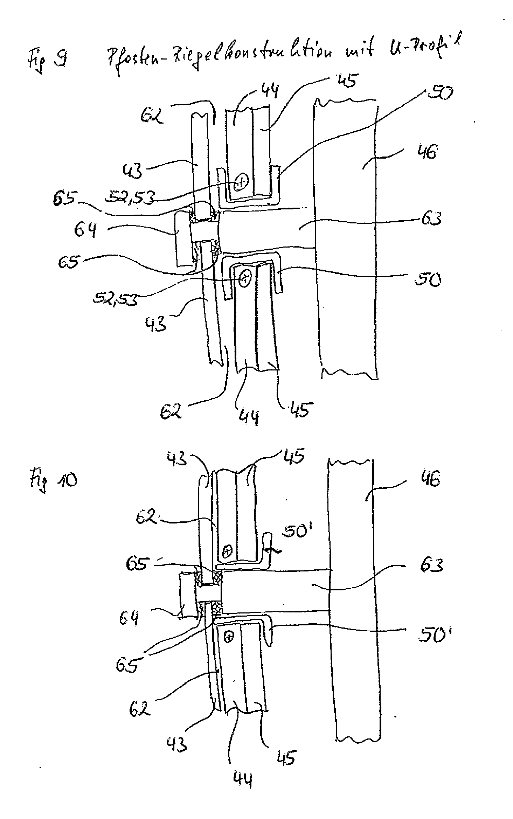

In Fig. 9 ist eine Ausführungsform einer Pfosten-Riegelkonstruktion veranschaulicht, bei denen die Solarthermie-Kollektoren 44 jeweils in Befestigungselementen 50 gehaltert sind, die hier konkret als U-Profile ausgebildet sind. Die Glaselemente bzw. Fassadenelemente 43 sind wie in der Pfosten-Riegelkonstruktion üblich, über Abdeckleisten 64, die gegen die Pfosten 63 verschraubt werden, gehalten. Hierbei können zwischen Abdeckleisten 64 und/oder Pfosten 63 und dem Glaselement bzw. Fassadenelement 43 noch Dichtelemente 65 vorgesehen werden.

Die Ausführungsform nach Fig. 10 unterscheidet sich von der Ausführungsform nach Fig. 9 dadurch, dass die Solarthermie-Kollektoren 44 hier nicht in U-profilartig ausgebildeten Befestigungselementen 50, sondern in Befestigungselementen 50' gehaltert sind, die hier als L-Profile ausgebildet sind.

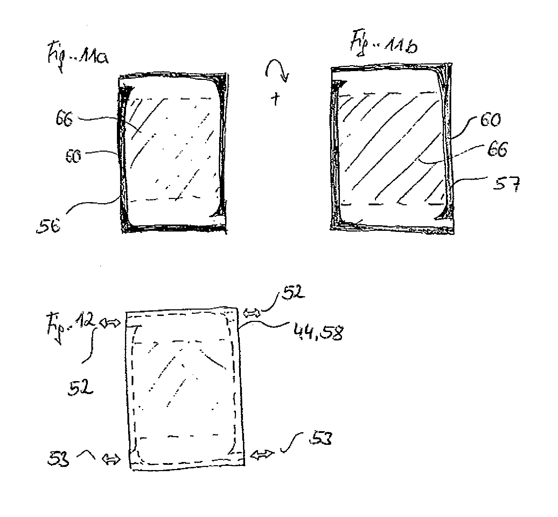

In den Fig. 11a und 11b ist jeweils ein Absorberblech 56 bzw. ein Rückseitenblech 57 einer Ausführungsform des Solarthermie-Kollektors 44 veranschaulicht. In Fig. 12 ist der aus dem Absorberblech 56 und dem Rückseitenblech 57 nach den Fig. 11a sowie 11b zusammengesetzte Solarthermie-Kollektor 44 in einer "Röntgenansicht" dargestellt. Erkennbar sind die jeweils schräg zueinander verlaufenden Temperierkanäle 66, 67 sowie der oberseitige Zu-/Abfluss und der unterseitige Zu-/Abfluss.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste:

- 10: Erstes Blech
- 11: Randvertiefung
- 12: Seitenrand
- 13: Innenbereich
- 14: Vertiefungen (rillenförmig)
- 15: Steg
- 16: Innenseite (des ersten Blechs)
- 20: Zweites Blech
- 21: Innenseite (des zweiten Blechs)
- 22: Rand (der Randvertiefung 11)
- 23: Kreuzungsbereich
- 24: Zufuhrkanal
- 25: Ableitungskanal
- 26: Hauptströmungskanal
- 27: Außenseite (des zweiten Blechs)
- 28: Absorberschicht
- 29: Außenseite (des ersten Blechs)
- 30: Hauptströmungsrichtung
- 31, 32: Einzelelemente, Innenbleche
- 33, 34: Einzelelemente, Außenbleche
- 41: Solarthermie-Fassadenelement
- 42: Sonne
- 43: Glaselement = Fassadenelement
- 44: Solarthermie-Kollektor
- 45: Isolation
- 46: Wandelement bzw. Gebäudewand
- 47: Befestigungselement Glas
- 48: Klebeelement Glas zu Befestigungselement
- 49: Befestigungselement Kollektor zu Glas
- 50, 50': Befestigungselement Kollektor zu Gebäudewand
- 51: Absorberrohr
- 52: Zu-/Abfluß oben
- 53: Zu-/Abfluß unten
- 54: Wärmetauschermedium: i.a. Wasser mit Glycol und Korrosionsschutzadditiven
- 55: Absorberblech des konventionellen Flachkollektors
- 56: Absorberblech des plattenförmigen Solarthermie-Kollektors
- 57: Rückseitenblech des plattenförmigen Solarthermie-Kollektors
- 58: Konventioneller Flachkollektor
- 59: Plattenförmiger Flachkollektor
- 60: Druckfeste berandende Verbindung
- 61: Flächige druckfeste Verbindungselemente
- 62: Luft bzw. Edelgas (Xenon, Argon, etc.)
- 63: Pfosten
- 64: Abdeckleiste
- 65: Dichtelemente
- 66, 67: Rillung - Temperierkanäle

## Patentansprüche

1. Sonnenkollektor zum Erwärmen eines Fluids, umfassend
- ein erstes Blech (10) mit einer Außenseite (29) und einer Innenseite (16),
- ein zweites Blech (20) mit einer Außenseite (27) und einer Innenseite (21), wobei das erste Blech (10) und/oder das zweite Blech (20) mit einem Absorptionsmittel, insbesondere einer Absorberschicht (28) zur Absorption von Sonnenstrahlung versehen ist,
wobei die Innenseite (16, 21) des ersten und/oder zweiten Blechs mit mindestens zwei rillenförmigen Vertiefungen (14) versehen ist und mindestens ein Steg (15) zwischen den mindestens zwei rillenförmigen Vertiefungen (14) angeordnet ist,
**dadurch gekennzeichnet, dass**
die Innenseiten (16, 21) der beiden Bleche (10, 20) in Kontakt gebracht werden derart, dass die mindestens zwei rillenförmigen Vertiefungen (14) zumindest Teile eines Fluidkanals ausbilden und der mindestens eine Steg (15) zumindest bereichsweise von Fluid überströmbar ist.

2. Sonnenkollektor nach Anspruch 1,
**dadurch gekennzeichnet, dass**
die Innenseiten der mindestens zwei Bleche (10, 20) zumindest abschnittsweise einen Hauptströmungskanal (26) ausbilden, innerhalb dem mindestens eine rillenförmige Vertiefung (14) und/oder ein Steg, die/der in ihrer/seiner Längserstreckung zumindest bereichsweise einen Winkel von > 1°, vorzugsweise > 10°, weiter vorzugsweise > 20°, insbesondere > 45° und/oder < 90°, vorzugsweise kleiner < 80°, weiter vorzugsweise < 60°, insbesondere < 30° gegenüber einer Hauptströmungsrichtung (30) aufweist, angeordnet ist.

3. Sonnenkollektor nach Anspruch 1 oder 2,
**dadurch gekennzeichnet, dass**
zumindest eine Vertiefung (14) durch Materialabtragung und/oder Materialverdrängung, insbesondere durch Prägung zumindest abschnittsweise hergestellt ist.

4. Sonnenkollektor nach einem der vorhergehenden Ansprüche,
**dadurch gekennzeichnet, dass**
das erste Blech (10) und das zweite Blech (20) im Wesentlichen identisch oder spiegelsymmetrisch sind.

5. Sonnenkollektor nach einem der vorhergehenden Ansprüche, insbesondere nach Anspruch 4,
**dadurch gekennzeichnet, dass**
das erste Blech (10) gegenüber dem zweiten Blech (20) um eine Achse, die in einer Kontaktebene liegt, rotiert ist.

6. Sonnenkollektor nach einem der vorhergehenden Ansprüche,
**dadurch gekennzeichnet, dass**
mindestens zwei Vertiefungen (14) und/oder mindestens zwei Stege (15) des ersten und zweiten Blechs (10, 20) einander überkreuzend ausgebildet sind, wobei ein Kreuzungswinkel vorzugsweise > 1°, weiter vorzugsweise > 10°, insbesondere > 45°, beispielsweise etwa 90° und/oder < 90°, vorzugsweise kleiner < 70°, weiter vorzugsweise < 60°, insbesondere < 45°, beispielsweise < etwa 30°, beträgt.

7. Sonnenkollektor nach einem der vorhergehenden Ansprüche,
**dadurch gekennzeichnet, dass**
der von den Vertiefungen (14) gebildete Fluidkanal bzw. "Gesamt"-Strömungskanal einen kurvigen, insbesondere mäandrierenden und/oder in sich geschlossenen Verlauf aufweist.

8. Sonnenkollektor nach einem der vorhergehenden Ansprüche,
**dadurch gekennzeichnet, dass**
die Absorberschicht Titandioxid, vorzugsweise mit Silber dotiert, umfasst.

9. Sonnenkollektor nach einem der vorhergehenden Ansprüche,
**dadurch gekennzeichnet, dass**
die Absorberschicht (28) mittels eines Sol-Gel-Verfahrens hergestellt ist.

10. Sonnenkollektor nach einem der vorhergehenden Ansprüche,
**dadurch gekennzeichnet, dass**
das erste und zweite Blech (10, 20) zumindest punktuell auch in einem Innenbereich (13) miteinander verbunden, insbesondere verklebt, verschweißt und/oder verlötet sind.

11. Sonnekollektor nach einem der vorhergehenden Ansprüche, insbesondere nach Anspruch 10,
**dadurch gekennzeichnet, dass**
das erste und das zweite Blech (10, 20) zumindest abschnittsweise an mindestens einem Kreuzungsbereich (23) von mindestens zwei Stegen (14) miteinander verbunden, insbesondere verklebt, verschweißt und/oder verlötet sind.

12. Sonnenkollektor nach einem der vorhergehenden Ansprüche,
**dadurch gekennzeichnet, dass**
das mindestens eine erste und/oder zweite Blech (10, 20) zumindest teilweise aus Aluminium und/oder Kupfer und/oder rostfreiem Stahl gebildet ist.

13. Sonnenkollektor nach einem der vorhergehenden Ansprüche,
**dadurch gekennzeichnet, dass**
die Vertiefungen (14) des mindestens einen ersten und/oder zweiten Blechs (10, 20) zumindest abschnittsweise, insbesondere über ihre gesamte Längserstreckung zueinander parallel verlaufen.

14. Sonnenkollektor nach einem der vorhergehenden Ansprüche,
**dadurch gekennzeichnet, dass**
die Vertiefungen (14) des mindestens einen ersten und/oder zweiten Blechs (10, 20) im Wesentlichen gerade verlaufen.

15. Sonnenkollektor nach einem der vorhergehenden Ansprüche,
**dadurch gekennzeichnet, dass**
sich mindestens eine Vertiefung (14) des ersten und/oder zweiten Blechs (10, 20) mindestens zweimal, vorzugsweise mindestens viermal, insbesondere mindestens sechsmal mit den Vertiefungen des jeweilig gegenüberliegenden Blechs überschneidet.

16. Sonnenkollektor nach einem der Ansprüche 1 bis 15,
**dadurch gekennzeichnet, dass**
das erste Blech (10) und/oder das zweite Blech (20) jeweils aus zwei oder mehr aufeinandergelegten flächigen Einzelelementen (31 bis 34) gebildet sind.

17. Verwendung eines Wärmetauschers, insbesondere mit den Merkmalen des Sonnenkollektors nach einem der vorhergehenden Ansprüche, umfassend
- ein erstes Blech (10) mit einer Außenseite (29) und einer Innenseite (16),
- ein zweites Blech (20) mit einer Außenseite (27) und einer Innenseite (21), wobei vorzugsweise das erste Blech (10) und/oder das zweite Blech (20) mit einem Absorptionsmittel, insbesondere einer Absorberschicht (28) zur Absorption von Sonnenstrahlung versehen ist,
wobei die Innenseite (16, 21) des ersten und/oder zweiten Blechs (10, 20) mit mindestens zwei rillenförmigen Vertiefungen (14) versehen ist und mindestens ein Steg (15) zwischen den mindestens zwei rillenförmigen Vertiefungen (14) angeordnet ist sowie die Innenseiten (16, 21) der beiden Bleche in Kontakt gebracht werden derart, dass die mindestens zwei rillenförmigen Vertiefungen (14) zumindest Teile eines Fluidkanals ausbilden und der mindestens eine Steg (15) zumindest bereichsweise von Fluid überströmbar ist, wobei der Wärmetauscher als Sonnenkollektor verwendet wird.

18. Verfahren zur Herstellung eines Sonnenkollektors, insbesondere nach einem der Ansprüche 1 bis 16, umfassend die Schritte:
a) Bereitstellen eines ersten Blechs (10) mit einer Außenseite (29) und einer Innenseite (16) sowie eines zweiten Blechs (20) mit einer Außenseite (27) und einer Innenseite (21),
b) Ausstatten des ersten Blechs (10) und/oder des zweiten Blechs (20) mit einem Absorptionsmittel, insbesondere einer Absorberschicht (28) zur Absorption von Sonnenstrahlung,
c) Ausstatten der Innenseite (16, 21) des ersten und/oder zweiten Blechs (10, 20) mit mindestens zwei rillenförmigen Vertiefungen (14), wobei mindestens ein Steg (15) zwischen den mindestens zwei rillenförmigen Vertiefungen (14) ausgebildet wird, sowie Kontaktieren der Innenseiten (16, 21) der beiden Bleche (10, 20) derart, dass die mindestens zwei rillenförmigen Vertiefungen (14) zumindest Teile eines Fluidkanals ausbilden und der mindestens eine Steg (15) zumindest bereichsweise von Fluid überströmbar ist.

19. Verfahren nach Anspruch 18,
**dadurch gekennzeichnet, dass**
zumindest eine rillenförmige Vertiefung (14) durch Materialabtragung und/oder Materialverdrängung, insbesondere durch Prägung hergestellt wird.

20. Verfahren nach Anspruch 18 oder 19,
**dadurch gekennzeichnet, dass**
im Schritt a) im Wesentlichen, insbesondere bezüglich Geometrie und/oder Orientierung der Vertiefungen, identische Bleche bereitgestellt werden.

21. Verfahren nach einem der Ansprüche 18 bis 20, insbesondere nach Anspruch 20,
**dadurch gekennzeichnet, dass**
die beiden Bleche (10, 20) vor ihrem Kontaktieren zunächst von einer Parallelposition ausgehend um 180° gegeneinander rotiert, positioniert werden.

22. Verfahren nach einem der Ansprüche 18 bis 21,
**dadurch gekennzeichnet, dass**
die Absorberschicht (28), insbesondere umfassend vorzugsweise mit Silber dotiertes Titandioxid, mittels Sol-Gel-Verfahren hergestellt wird.
